(19) Europäisches Patentamt

European Patent Office

Office européen des brevets

(11) **EP 1 699 273 A2**

(12) **EUROPEAN PATENT APPLICATION**

(43) Date of publication:
**06.09.2006 Bulletin 2006/36**

(51) Int Cl.:
***H05B 41/282*** (2006.01)

(21) Application number: **06110054.1**

(22) Date of filing: **16.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **04.03.2005 KR 2005018108**

(71) Applicant: **SAMSUNG ELECTRONICS CO., LTD.**
**Suwon-si, Gyeonggi-Do 442-742 (KR)**

(72) Inventor: **PARK, Cheol-jin**
**Taean-eup**
**Hwaseong-si**
**Gyeonggi-do (KR)**

(74) Representative: **Jackson, Jonathan Andrew et al**
**Venner Shipley LLP**
**20 Little Britain**
**GB-London EC1A 7DH (GB)**

(54) **A Lamp Drive Unit**

(57)  A cold cathode fluorescent lamp (CCFL) is disclosed that provides a structure which may be driven in parallel. For this purpose, a lamp drive device comprises a plurality of CCFLs connected in parallel, a first current limiting unit connected to the plurality of CCFLs to control the magnitude of supplied power so as to discharge the CCFLs, and an inverter for changing the magnitude of supplied AC power and supplying the changed AC power to the first current limiting unit. This parallel drive CCFL structure may reduce manufacture costs of CCFL and minimize device failure rates.

# FIG. 2

EP 1 699 273 A2

**Description**

The present invention relates to a lamp drive unit for a cold cathode fluorescent lamp.

A liquid crystal display (LCD) may be defined as a flat plate display that precisely controls liquid crystals to display data processed by an information processing device in such formats as text, image and moving picture. In addition, an LCD is a dark element, that is, it does not emit light by itself, so it requires a separate light source unit, as distinguished from a display having its own light-emitting ability such as a cathode ray tube.

The light source unit for an LCD may be a light emitting diode (LED) giving one-dimensional light, a cold cathode fluorescent lamp (CCFL), or an external electrode fluorescent lamp (EEFL) giving two-dimensional light.

EEFL has a brightness level of over 400 nit, which is an improvement over CCFL by at least 60%, and has application to thin film transistor (TFT) LCD, TV, and other applications requiring high brightness. Further, in contrast to CCFL, EEFL has an external electrode that operates in parallel, so current deviation between lamps is decreased and the lamps are capable of realizing regular brightness.

In particular, adopting EEFL may reduce the quantity of inverters required for each lamp by one, which reduces the cost, decreases the number of parts, and lowers the weight of the LCD module together with ensuring efficient energy consumption and long life. However, EEFL suffers from noise and heat in comparison to CCFL, as well as being more difficult to manufacture. The structure and operational principle of a conventional CCFL will be described.

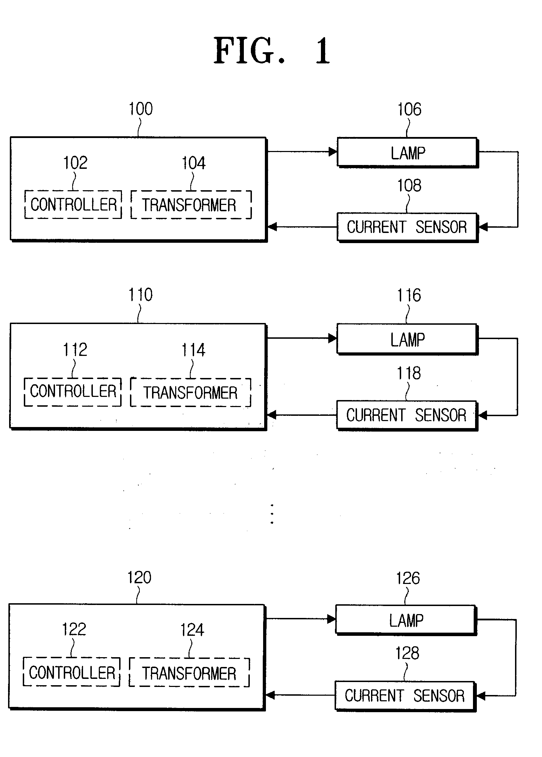

Figure 1 shows the structure of a conventional CCFL. As shown in Figure 1, CCFL consists of a plurality of inverters 100, 110, 120, lamps 106, 116, 126, and current sensors 108, 118, 128. The inverter 100 converts AC power into DC power and includes a controller 102 and transformer 104.

As shown in Figure 1, lamp 106 is connected to inverter 100, lamp 116 is connected to inverter 110, and lamp 126 is connected to inverter 120. The current sensor 108 senses an amount of current sent from lamp 106 and transmits it to the inverter 100. The controller 102 of inverter 100 compares the amount of current transmitted from the current sensor 108 to a standard (reference) amount of current and then controls the amount of current to be sent to lamp 106. The transformer 104 changes the magnitude of voltage received. That is to say, since the magnitude of supplied voltage is smaller than the magnitude of voltage required for discharging the lamp, the transformer changes the magnitude of the supplied voltage to an appropriate level required for discharging the lamp. The magnitude of the voltage required is controlled by the controller 102.

As shown in Figure 1, each lamp is connected to an inherent inverter. Accordingly, for a large LCD product having many lamps, numerous inverters are used, which increases the number of transformers, controllers and switching elements needed for the product. Since the number of transformers, controllers and switching elements is increased, manufacturing costs for CCFL and failure rate are also increased. That is to say, driving characteristics are changed due to tolerance of the lamps and inverters, so it is difficult to control deviation of current flowing through the lamps, which causes imbalance in brightness and has limiting effect on the life of the lamps. Thus, there is a need for a CCFL structure that can limit the number of components required.

Aspects of the present invention are designed to address the problems of the prior art and thus it is an object of the present invention to provide a cold cathode fluorescent lamp (CCFL) that may be driven in parallel. Another object of the present invention is to provide a method for manufacturing CCFL with low manufacturing costs and low failure rate.

One aspect of the present invention is defined in claim 1 appended hereto. Other advantageous and/or preferred features are provided in claims 2 and 3 appended hereto.

In order to accomplish the above exemplary objects, the present invention comprises a lamp drive device, which comprises a plurality of CCFLs connected in parallel. The lamp drive device comprises a first current limiting unit connected to the plurality of CCFLs to control a magnitude of supplied power so as to facilitate discharge the CCFLs, and an inverter for changing the magnitude of supplied AC power and supplying the changed AC power to the first current limiting unit.

In one exemplary embodiment, the first current limiting unit comprises a plurality of ballast capacitors, the ballast capacitors being connected to the CCFLs, not to be overlapped, and the ballast capacitors have a capacitance in the range of several pF to several hundred pF.

In the exemplary embodiment, the lamp drive device further comprises a second current limiting unit for controlling a magnitude of voltage supplied from the CCFLs, and the inverter comprises a transformer for changing the magnitude of AC power according to a control command, and a controller for controlling the transformer.

In another aspect of the invention, there is provided an image display device, which comprises an image display panel installed in a support case to display an image using an input light, and a linear light source unit for providing light to the image display panel, wherein the linear light source unit comprises a plurality of CCFLs connected in parallel, a first current limiting unit connected to the plurality of CCFLs to control a magnitude of supplied power so as to discharge the CCFLs; and an inverter for changing a magnitude of supplied AC power and supplying the changed AC power to the first current limiting unit.

An embodiment of the present invention will now be described, by way of example only and with reference to Figures 2 to 4 of the accompanying drawings, in which:

Figure 1 shows the structure of a conventional cold cathode fluorescent lamps (CCFL);
Figure 2 shows the structure of a CCFL according to an exemplary embodiment of the present invention;
Figure 3 shows an image display panel including the CCFL according to an exemplary embodiment of the present invention; and
Figure 4 illustrates a schematic diagram of a lamp and ballast capacitor connected to the lamp, which configure the CCFL according to an exemplary embodiment of the present invention.

Throughout the drawings, like reference numbers should be understood to refer to like elements, features, and structures.

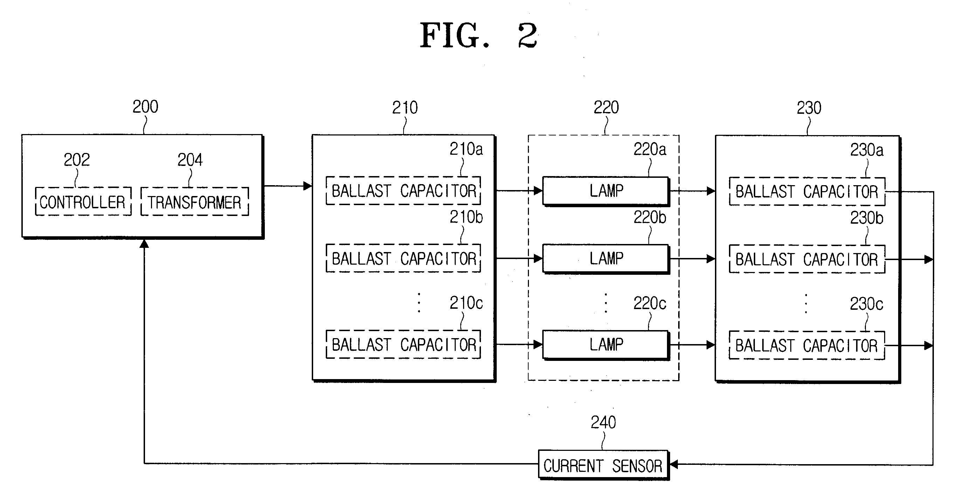

The matters exemplified in this description are provided to assist in a comprehensive understanding of various exemplary embodiments of the present invention disclosed with reference to the figures 2 to 4. Accordingly, those of ordinary skill in the art will recognize that various changes and modifications of the exemplary embodiments described herein can be made without departing from the scope of the claimed invention. Descriptions of well-known functions and constructions are omitted for clarity and conciseness. Hereinafter, a method for manufacturing a parallel drive cold cathode fluorescent lamp (CCFL) according to one exemplary embodiment of the present invention will be described in more detail with reference to Figures 2 to 4. In accordance with different aspects of the present invention, a CCFL may be driven in parallel like an external electrode fluorescent lamp (EEFL) and flat fluorescent lamp (FFL).

Figure 2 shows structure of a parallel drive CCFL in accordance to an exemplary embodiment of the present invention. In Figure 2, CCFL comprises an inverter 200, two current limiting units 210 and 230, a plurality of lamps 220 (220a to 220c), and a current sensor 240. The inverter 200 comprises a controller 202 and a transformer 204. The current limiting units 210 and 230 comprise a plurality of ballast capacitors 210a, 210b, 210c and 230a, 230b, 230c, respectively.

The current sensor 240 detects an amount of current provided by the current limiting unit 230, and transmits the detected amount of current to the inverter 200.

The controller 202 of the inverter 200 compares the amount of current transmitted from the current sensor 240 with a standard amount of current, and then forwards an appropriate amount of current to the lamp 220. The transformer 204 changes the magnitude of the voltage supplied. That is to say, since the magnitude of supplied voltage is smaller than the magnitude of the voltage required for discharging the lamp, the transformer 204 boosts the magnitude of the supplied voltage by an appropriate amount. The magnitude of the voltage is determined by the controller 202. As mentioned above, the controller 202 determines the magnitude of voltage to be transmitted to a plurality of lamps, not just one lamp. Thus, the controller 202 manages a plurality of lamps in one group.

The current limiting units 210 and 230 supply sufficient startup power to the lamps until the CCFL starts discharging, and reduces the effects on tolerance of the lamp caused by ballast impedance being greater than lamp impedance. As mentioned above, since the lamp has inherent impedance characteristics, different current values are provided to the lamps depending on this value, which is not the same current value that is being provided to the plurality of lamps. That is to say, a lamp with a small impedance value allows more current to flow, and a lamp with a great impedance value allows less current to flow. Thus, a lamp allowing high levels of current has a shorter life, and a lamp allowing small levels of current does not receive adequate power for discharging. Thus, there is a need to make a plurality of lamps undergo discharge regardless of lamp impedance value.

That is to say, the current limiting units 210 and 230 discharge the lamps using the current transmitted regardless of impedance value. Namely, the current limiting units 210 and 230 enhance impedance by using a small value ballast capacitor, and accordingly generate a voltage capable of discharging the lamps. Additionally, the current limiting units 210 and 230 may reduce the current deviation of the lamps, which is generated by tolerance of the lamps, by enhancing impedance. The impedance of a capacitor may be expressed by the following equation 1.

$$X_C = \frac{1}{2\pi f C} \qquad (1)$$

wherein, Xc is impedance of the capacitor, f is dynamic frequency, and C is the capacitance of the capacitor.

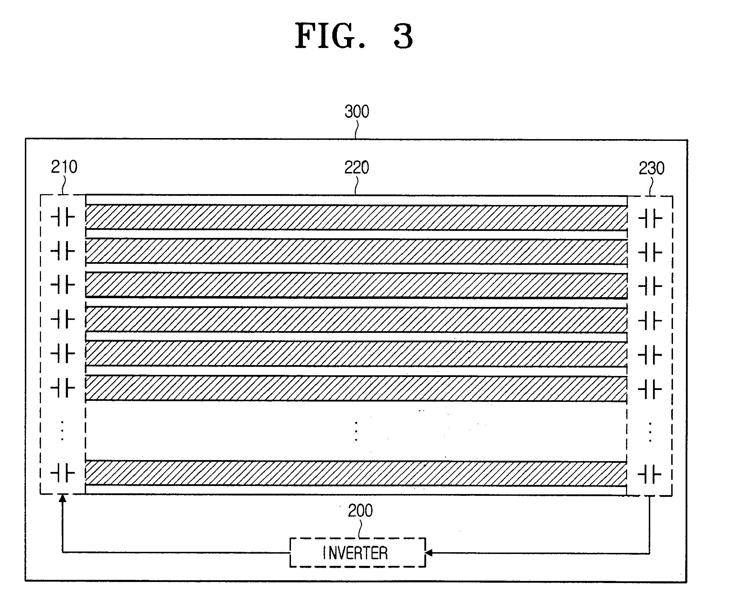

Figure 3 shows an image display panel 300 employing the parallel drive CCFL according to one exemplary embodiment of the present invention. Referring to Figure 3, the image display panel comprises a plurality of lamps 220, the current limiting units 210 and 230, and an inverter 200. The current sensor (not shown) may be connected between the current limiting unit 230 and the lamp 220, or it may be included in the inverter 200. As mentioned above, the current limiting units 210 and 230 each comprise a plurality of capacitors, each capacitor being connected to the lamp 220. The capacitors function to supply sufficient driving power to the lamps and decrease the effects of tolerance on the lamps as described above.

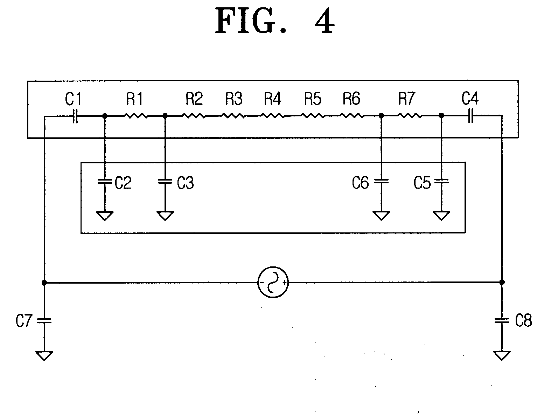

Figure 4 illustrates a schematic diagram of a lamp and ballast capacitor connected to the lamp, which configure the CCFL according to one exemplary embodiment of the present invention.

The lamp can be thought of as comprising a plurality of "resistors" R1 to R7. The resistors of the lamp operate as elements having "negative resistance". That is to say, when current is supplied to the resistors, temperature of the resistors is increased and the effective value of resistance for each resistor is decreased. If the effective resistance value is decreased, the amount of current flowing through the resistors is increased. If an amount of current is increased, the temperature of the resistor is further increased. When the current flowing through the resistor exceeds a threshold level, the resistor can be damaged. In order to solve this problem, an aspect of the present invention proposes a current limiting unit configured with at least one capacitor. Since ballast capacitor is proposed as above, the magnitude of voltage supplied to each lamp is kept constant, and at the same time the supplied voltage is transformed into a discharge voltage required for the lamp. In addition, ballast capacitors having small capacitance values generate high impedance, thereby reducing current deviation of the lamp. In one exemplary embodiment, the ballast capacitor has a capacitance in the range of several pF to several hundred pF.

As illustrated by Figure 4, C1 and C4 are ballast capacitors acting as external electrodes for discharging the lamp, and C2 and C5 are capacitors existing between the electrode and the grounding surface. C3 and C6 are capacitors existing between the lamp and the grounding surface. C7 and C8 are capacitors existing between the power supply and the grounding surface. An exemplary embodiment of the present invention controls the magnitude of voltage to be transmitted to the lamp by adjusting a ballast capacitor acting as an external electrode.

According to the parallel drive CCFL of the exemplary embodiment of the present invention, since a magnitude of voltage to be transmitted to the lamp is controlled using a capacitor, deviation among many lamps may be reduced. Such a parallel drive CCFL may decrease manufacture costs and minimize device failure rates.

Preferred exemplary embodiments have been depicted and described to illustrate the principle of the present invention, but the present invention is not limited to the structure and operation as depicted and described above. It will be understood by those of ordinary skill in the art that various changes and modifications are possible without departing from the scope of the present invention defined by the appended claims.

**Claims**

1.  A lamp drive device (210) operable to drive a plurality of cold cathode fluorescent lamps, CCFLs, (220), the device (210) comprising:

    a power control unit (210) for connection to the plurality of CCFLs (220) operable to control the power to each of the CCFLs (220) by controlling an electrical characteristic of the CCFLs (220).

2.  A lamp drive device according to claim 1, wherein the power control unit (210) is operable to control electrical characteristic such that the current to each of the CCFLs to be substantially the same.

3.  A lamp drive device (210) according to either one of claims 1 or 2, wherein the power control unit (210) is configured such that the impedance of each of the CCFLs is substantially the same.

4.  A lamp drive device, comprising:

    a plurality of cold cathode fluorescent lamps (CCFLs) connected in parallel;
    a first current limiting unit connected to the plurality of CCFLs to control a magnitude of supplied power to facilitate discharge of the CCFLs; and
    an inverter for changing the magnitude of the supplied power and supplying the changed power to the first current limiting unit.

5.  The lamp drive device according to claim 4, wherein the first current limiting unit comprises a plurality of ballast capacitors.

6.  The lamp drive device according to claim 5, wherein the plurality of ballast capacitors operate as external electrodes for respective ones of the plurality of CCFLs.

7. The lamp drive device according to claim 5, wherein the ballast capacitors have a capacitance in the range of several pF to several hundred pF.

8. The lamp drive device according to claim 5, further comprising:

   a second current limiting unit for controlling magnitude of the voltage supplied from the CCFLs.

9. The lamp drive device according to claim 4, wherein the inverter comprises:

   a transformer for changing the magnitude of supplied power according to a control command; and
   a controller for controlling the transformer.

10. An image display device, comprising:

    an image display panel for displaying an image using light; and
    a light source for emitting light to the image display panel,

    wherein the light source comprises:

    a plurality of cold cathode fluorescent lamps (CCFLs) connected in parallel; a first current limiting unit connected to the plurality of CCFLs to control a magnitude of supplied power to facilitate discharge the CCFLs; and an inverter for changing the magnitude of supplied power and supplying the changed power to the first current limiting unit.

11. The image display device according to claim 10, wherein the first current limiting unit comprises a plurality of ballast capacitors.

12. The image display device according to claim 11, wherein the plurality of ballast capacitors operate as external electrodes for respective ones of the plurality of CCFLs.

13. The image display device according to claim 11, wherein the ballast capacitors have a capacitance of several pF to several hundred pF.

14. The image display device according to claim 11, further comprising:

    a second current limiting unit for controlling magnitude of voltage supplied from the CCFLs.

15. The image display device according to claim 10, wherein the inverter comprises:

    a transformer for changing the magnitude of supplied power according to a control command; and
    a controller for controlling the transformer.

16. A method of controlling a lamp drive device, the method comprising the steps of:

    connecting a plurality of cold cathode fluorescent lamps (CCFLs) in parallel;
    limiting current to the plurality of CCFLs via a first current limiting unit configured to control magnitude of supplied power and facilitate discharge of the CCFLs;
    changing the magnitude of the supplied power; and
    supplying the changed power to the current limiting unit.

17. The method of controlling a lamp drive device according to claim 16,
    wherein the first current limiting unit comprises a plurality of ballast capacitors.

18. The method of controlling a lamp drive device according to claim 17,
    wherein the plurality of ballast capacitors operate as external electrodes for respective ones of the plurality of CCFLs.

19. The method of controlling a lamp drive device according to claim 17,
    wherein the ballast capacitors have a capacitance in the range of several pF to several hundred pF.

**20.** The method of controlling a lamp drive device according to claim 17, further comprising:

controlling magnitude of the voltage supplied from the CCFLs via a second current limiting unit.

**21.** The method of controlling a lamp drive device according to claim 16, further comprising:

changing the magnitude of supplied power according to a control command via a transformer; and controlling the transformer via a controller.

# FIG. 1

100

102        104

CONTROLLER    TRANSFORMER

106

LAMP

108

CURRENT SENSOR

110

112        114

CONTROLLER    TRANSFORMER

116

LAMP

118

CURRENT SENSOR

⋮

120

122        124

CONTROLLER    TRANSFORMER

126

LAMP

128

CURRENT SENSOR

FIG. 2

FIG. 3

# FIG. 4